# EUROPÄISCHE PATENTSCHRIFT

(11) **EP 1 266 793 B1**
(45) Veröffentlichungstag und Bekanntmachung des Hinweises auf die Patenterteilung: **16.04.2008**
(21) Anmeldenummer: 02012532.4
(22) Anmeldetag: 05.06.2002
(51) Int. Cl.: B60N 2/54

(54) **Fahrzeugsitz**
Vehicle seat
Siège de véhicule

(30) Priorität: 16.06.2001 DE 10129127
(43) Veröffentlichungstag der Anmeldung: 18.12.2002
(73) Patentinhaber: GRAMMER AG, 92224 Amberg (DE)
(72) Erfinder: Kohl, Josef, 92242 Hirschau (DE); Meier, Manfred, 93133 Burgelengenfeld (DE); Raum, Holger, 92237 Sulzbach-Rosenberg (DE)
(74) Vertreter: LOUIS, PÖHLAU, LOHRENTZ

(56) Entgegenhaltungen:
- EP-A- 1 050 428
- US-A- 3 743 230
- US-A- 4 471 934
- US-A- 5 601 338
- PATENT ABSTRACTS OF JAPAN vol. 1997, no. 06, 30. Juni 1997 (1997-06-30) -& JP 09 039633 A (TACHI S CO LTD), 10. Februar 1997 (1997-02-10)

## Beschreibung

Die Erfindung betrifft einen Fahrzeugsitz gemäß dem Oberbegriff des Anspruches 1.

Solche Fahrzeugsitze kommen beispielsweise bei Lastkraftwagen, Traktoren, Baumaschinen usw. zum Einsatz. Diese Fahrzeugsitze sind beispielsweise zwischen 50 und 130 kg Gewicht des jeweiligen Sitzbenutzers mit Hilfe der Gewichtseinstell-Betätigungseinrichtung einstellbar. Dabei wird die Gewichtseinstellung des Fahrzeugsitzes üblicherweise dem geschätzten Gewicht des jeweiligen Sitzbenutzers entsprechend eingestellt. Hat sich das Gewicht des Sitzbenutzers durch Gewichtszu- oder abnahme oder infolge der Kleidung des Sitzbenutzers jedoch geändert, so erfolgtbei solchen bekannten Fahrzeugsitzen keine optimale Gewichtseinstellung. Das bedeutet, daß die Federung des Fahrzeugsitzes, d.h. der Sitzplatte, in bezug auf die Basis nicht optimal eingestellt ist. Die Federung des Fahrzeugsitzes erfolgt also nicht im optimalen Schwingbereich des Fahrzeugsitzes. Entweder ist die Federung des Fahrzeugsitzes mittels der zur Gewichtseinstellung vorgesehenen Federeinrichtung zu hart eingestellt, so daß der Schwing- bzw. Federweg über dem optimalen Schwing- bzw. Federweg liegt und die Schwenkamplitude klein ist, oder die zur Gewichtseinstellung vorgesehene Federeinrichtung wird zu weich eingestellt, so daß der Schwing- bzw. Federweg unterhalb des optimalen Schwing- bzw. Federweges des Fahrzeugsitzes liegt.

Ein Sitz der eingangs genannten Art ist aus der US 5 601 338 bekannt. Bei diesem bekannten Fahrzeugsitz weist die Niveau-Anzeigeeinrichtung eine Vielzahl miteinander zusammenwirkender Bauteile auf, was sich sowohl auf die Herstellungskosten als auch auf die Zusammenbaukosten dieses bekannten Sitzes entsprechend auswirkt.

Aus der EP 1 050 428 A1 ist ein Fahrzeugsitz mit einer einstellbaren Federung bekannt, der an einem Scherengestell angebracht ist. Bei diesem bekannten Fahrzeugsitz ist die Federungskraft über einen weiten Gewichtsbereich von Sitzbenutzern mittels einer Einstelleinrichtung einstellbar, die einen Hebel aufweist, der an einer Basiseinrichtung des Fahrzeugsitzes verschwenkbar angebracht ist. Eine Niveau-Anzeigeeinrichtung, die zur Anzeige der Einstellung der Sitzplatte auf den dem Gewicht des jeweiligen Sitzbenutzers in bezug auf den Gesamt-Schwingweg der Sitzplatte in der Mitte dieses Gesamt-Schwingweges befindlichen, optimalen Einstellbereich der Federung vorgesehen wäre, weist dieser bekannten Fahrzeugsitz nicht auf.

Die JP-A 09039633 offenbart eine einfache Ausbildung einer Gewichtseinstellvorrichtung einer Federung eines Sitzes. Diese bekannte Gewichtseinstellvorrichtung weist eine Gewindespindel auf, die durch eine Schraubmutter durchgeschraubt ist. Die Schraubmutter ist an einem Verbindungselement vorgesehen, das mit einer Anzeige wirkverbunden ist. Die Anzeige erstreckt sich vom Sitz nach außen, d.h. sie ist von außen sichtbar und dient zur Anzeige des Gewichtes des jeweiligen Sitzbenutzers.

Der Erfindung liegt die Aufgabe zugrunde, einen Fahrzeugsitz der eingangs genannten Art zu schaffen, bei dem eine einfache Betätigung zur Einstellung des Fahrzeugsitzes auf das jeweilige Gewicht eines Sitzbenutzers sehr sicher und zuverlässig möglich ist, um eine optimale Federung des Fahrzeugsitzes zu bewirken.

Diese Aufgabe wird bei einem Fahrzeugsitz der eingangs genannten Art erfindungsgemäß durch die Merkmale des Kennzeichenteiles des Anspruches 1 gelöst.

Mit Hilfe der Niveau-Anzeigeeinrichtung ist es einfach und zuverlässig möglich, die zur Gewichtseinstellung vorgesehene Federeinrichtung genau passend derartig zu verstellen, daß eine genaue Anpassung der Federung des Fahrzeugsitzes auf das tatsächliche Gewicht des jeweiligen Sitzbenutzers möglich ist. Dabei wird die Gewichtseinstell-Betätigungseinrichtung vom jeweiligen Sitzbenutzer gezielt derartig betätigt, bis die Niveau-Anzeigeeinrichtung das in bezug auf den Federweg der Sitzplatte optimale Sitzplattenniveau anzeigt. In diesem Falle führt die Sitzplatte des Fahrzeugsitzes im Betrieb des Fahrzeuges eine Federung im optimalen Federwegbereich aus.

Dadurch, daß die Niveau-Anzeigeeinrichtung und die Gewichtseinstell-Betätigungseinrichtung am Vorderrand der Sitzplatte mittig vorgesehen sind, ergibt sich der Vorteil, daß der jeweilige Sitzbenutzer während der Gewichtseinstellung gerade sitzt und somit die Sitzplatte gleichmäßig belastet, wobei die Gewichtseinstell-Betätigungseinrichtung durch ihre am Vorderrand der Sitzplatte mittige Anordnung gut zugänglich und optimal betätigbar ist.

Erfindungsgemäß kann das längliche flexible Element einen Zeiger und der Anzeigekörper eine Sichtöffnung aufweisen, in die der Zeiger hineinsteht. Das längliche flexible Element kann hierbei von einem Draht, einem Seil, einer Schnur o.dgl. gebildet sein. Der Zeiger ist am länglichen flexiblen Element fixiert. Die Sichtöffnung des Anzeigekörpers, in die der Zeiger hineinsteht, ist an ihrem Rand zweckmäßigerweise mit einer Markierung versehen, die gleichsam eine Skalierung bildet. Diese Markierung kann von Farbbereichen unterschiedlicher Farbe, von Symbolen in Kombination mit Farbmarkierungen o.dgl. gebildet sein. Beispielsweise kann der optimale Sitzplattenniveau-Bereich grün oder gelb markiert sein. An diesen optimalen Sitzplattenniveau-Bereich kann sich rechts und links ein rotes Feld anschließen, um einen einfachen Hinweis darauf zu geben, daß der Fahrzeugsitz nicht optimal eingestellt ist, wenn der Zeiger sich in einem der beiden roten Bereiche befindet. Die außerhalb des optimalen Sitzplattenniveau-Bereiches befindlichen Bereiche können beispielsweise auch durch das Symbol eines kleinen Mannes bzw. eines großen Mannes verdeutlicht sein. Selbstverständlich sind auch andere Markierungen bzw. Symbole denkbar. Erfindungsgemäß kann der Anzeigekörper also eine Markierung für das dem jeweiligen Sitzbenutzer in bezug auf den Federweg optimal entsprechende Sitzniveau aufweisen. Desgleichen ist es möglich, daß das längliche flexible Element eine Markierung für das dem jeweiligen Sitzbenutzer in bezug auf den Federweg optimal entsprechende Sitzniveau und daß der Anzeigekörper eine relativ kleine Sichtöffnung für das längliche flexible Element aufweist. Während bei der weiter oben genannten Ausbildung der Niveau-Anzeigeeinrichtung mit einem Zeiger die Sichtöffnung des Anzeigekörpers eine ausreichende Längenerstreckung besitzt, ist bei der zuletzt genannten Ausbildung, bei der das längliche flexible Element eine Markierung für das den jeweiligen Sitzbenutzer in bezug auf den Federweg optimal entsprechende Sitzniveau aufweist, die Sichtöffnung relativ kurz dimensioniert, um eine entsprechend genaue Anzeige zu realisieren.

Bei einem Fahrzeugsitz der zuletzt genannten Art ist das längliche flexible Element vorzugsweise von einem Band gebildet, wobei der Anzeigekörper eine Sichtöffnung für das Band aufweist. Ein solches Band ist einfach mit entsprechenden Markierungen in Gestalt von farbigen Flächenbereichen oder in Gestalt von Piktogrammen, geometrischen Figuren o.dgl. gestaltbar.

Als besonders vorteilhaft hat es sich erwiesen, wenn bei dem erfindungsgemäßen Fahrzeugsitz der Anzeigekörper am Vorderrand der Sitzplatte mittig vorgesehen ist. Ein solchermaßen ausgebildeter Fahrzeugsitz weist den Vorteil auf, daß der Sitzbenutzer während der Gewichtseinstellung auf dem Fahrzeugsitz gerade sitzt und nach vorne unten zum Anzeigekörper blickt, so daß auf dem Fahrzeugsitz tatsächlich das jeweilige Gewicht des Sitzbenutzers gleichmäßig, symmetrisch wirksam ist. Aus demselben Grunde ist es bevorzugt, wenn die Gewichtseinstell-Betätigungseinrichtung dem Anzeigekörper am Vorderrand der Sitzplatte zugeordnet vorgesehen, d.h. mittig angeordnet ist, weil dann auch während der Betätigung der Betätigungseinrichtung zur Einstellung des Fahrzeugsitzes auf das Gewicht des jeweiligen Sitzbenutzers der Sitzbenutzer aufrecht und den Fahrzeugsitz gleichmäßig belastend sitzt.

Die Gewichtseinstell-Betätigungseinrichtung kann einen Handgriff aufweisen, der zwischen einer den Anzeigekörper umgebenden bzw. eng umschließenden Inaktivstellung und einer vom Anzeigekörper beabstandeten Aktivstellung hin und her verstellbar ist. In der Inaktivstellung macht sich der Handgriff der Gewichtseinstell-Betätigungseinrichtung am Fahrzeugsitz nicht störend bemerkbar. In der vom Anzeigekörper beabstandeten Aktivstellung kann der Handgriff beispielsweise um eine horizontale Schwenkachse um einen definierten Schwenkwinkel pumpend auf- und abgeschwenkt werden, um hierbei die Federeinrichtung des Fahrzeugsitzes passend schrittweise zu verstellen. Das kann sowohl in Richtung eines leichtgewichtigen Sitzbenutzers als auch in Richtung eines schwergewichtigen Sitzbenutzers, d.h. beispielsweise in einem Gewichtsbereich zwischen 50 und 130 kg geschehen.

Bei dem erfindungsgemäßen Fahrzeugsitz kann der Handgriff zwischen der Inaktivstellung und der Aktivstellung linear, d.h. in Sitzlängsrichtung hin- oder her verstellbar und in der Aktivstellung zum schrittweisen pumpenden Verstellen der zur Gewichtseinstellung vorgesehenen Federeinrichtung um eine horizontale Schwenkachse auf und ab schwenkbar sein. Eine andere Möglichkeit besteht erfindungsgemäß darin, daß der Handgriff um eine vertikale Achse zwischen der Inaktivstellung und der Aktivstellung hin und her verstellbar und in der Aktivstellung zum schrittweisen pumpenden Verstellen der zur Gewichtseinstellung vorgesehenen Federeinrichtung um eine horizontale Schwenkachse auf und ab schwenkbar ist.

Weitere Einzelheiten, Merkmale und Vorteile ergeben sich aus der nachfolgenden Beschreibung eines in der Zeichnung verdeutlichten Ausführungsbeispieles des erfindungsgemäßen Fahrzeugsitzes. Es zeigen:
- Figur 1: in einer Seitenansicht schematisch eine Ausbildung des Fahrzeugsitzes,
- Figur 2: eine Diagrammdarstellung des Schwingweges der Sitzplatte in bezug auf die Basis des Fahrzeugsitzes gemäß Figur 1 sowie des in der Mitte
dieses gesamten Schwingweges befindlichen optimalen Einstellbereiches der Federeinrichtung des Fahrzeugsitzes gemäß Figur 1,
- Figur 3: eine perspektivische Darstellung eines Fahrzeugsitzes, wie er in Figur 1 schematisch, stark abstrahiert, dargestellt ist,
- Figur 4: abgeschnitten eine perspektivische schematische Ansicht einer Ausbildung
der Niveau-Anzeigeeinrichtung des Fahrzeugsitzes gemäß Figur 1 bzw. 3,
- Figur 5: eine der Figur 4 ähnliche abgeschnittene räumliche Darstellung einer anderen Ausbildung der Niveau-Anzeigeeinrichtung des Fahrzeugsitzes
gemäß den Figuren 1 oder 3, und
- Figur 6: eine perspektivische Darstellung einer bevorzugten Ausbildung der Gewichtseinstell-Betätigungseinrichtung des Fahrzeugsitzes gemäß den Figuren 1 oder 3 mit der Niveau-Anzeigeeinrichtung, wie sie in Figur 4 schematisch verdeutlicht ist.

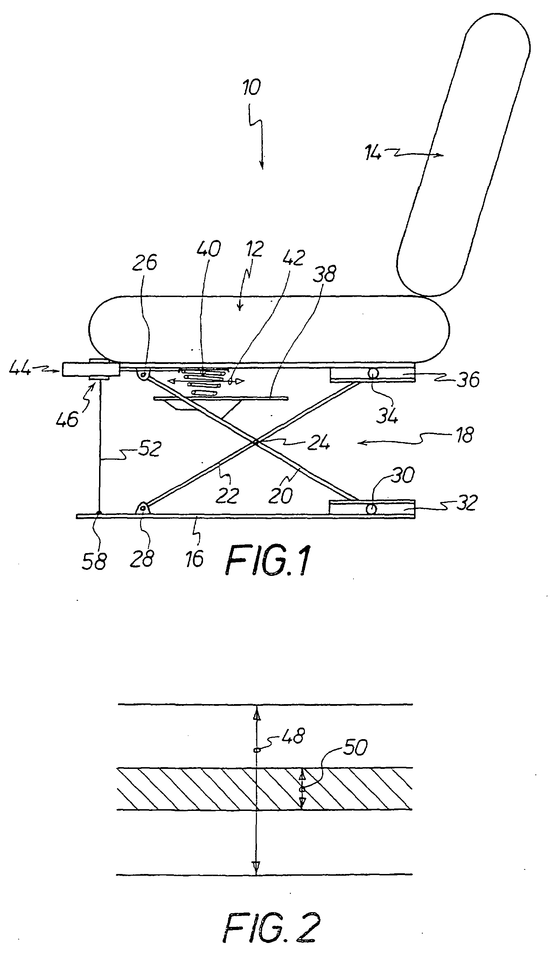

Figur 1 zeigt schematisiert in einer Seitenansicht eine Ausbildung des Fahrzeugsitzes 10, der eine Sitzplatte 12 und eine Rückenlehne 14 aufweist. Der Fahrzeugsitz 10 weist außerdem eine Basis 16 auf. Zwischen der Basis 16 und der Sitzplatte 12 ist ein Scherengestell 18 vorgesehen. Das Scherengestell 18 weist ein Paar seitliche erste Scherenelemente 20 und ein Paar seitliche zweite Scherenelemente 22 auf. Die ersten und die zweiten Scherenelemente 20 und 22 sind miteinander mittels einer Verbindungsachse 24 schwenkbeweglich verbunden. Die ersten Scherenelemente 20 sind mit ihrem einen Ende 26 an der Sitzplatte 12 schwenkbeweglich befestigt. Die zweiten Scherenelemente 22 sind mit ihrem ersten Ende 28 an der Basis 16 schwenkbeweglich befestigt. Die zweiten Enden 30 der ersten Scherenelemente 20 sind entlang Linearführungen 32 linear beweglich geführt, die an der Basis 16 vorgesehen sind. Die zweiten Enden 34 der zweiten Scherenelemente 22 sind entlang Linearführungen 36 linear beweglich geführt, die an der Sitzplatte 12 vorgesehen sind.

Zwischen den beiden ersten Scherenelementen 20 ist ein Flächenelement 38 fixiert, das zur Sitzplatte 12 parallel orientiert ist. Zwischen der Sitzplatte 12 und dem Flächenelement 38 ist eine Federeinrichtung 40 angeordnet, die zur Gewichtseinstellung des Fahrzeugsitzes 10 in Sitzlängsrichtung hin und her verstellbar ist. Das ist durch den Doppelpfeil 42 angedeutet.

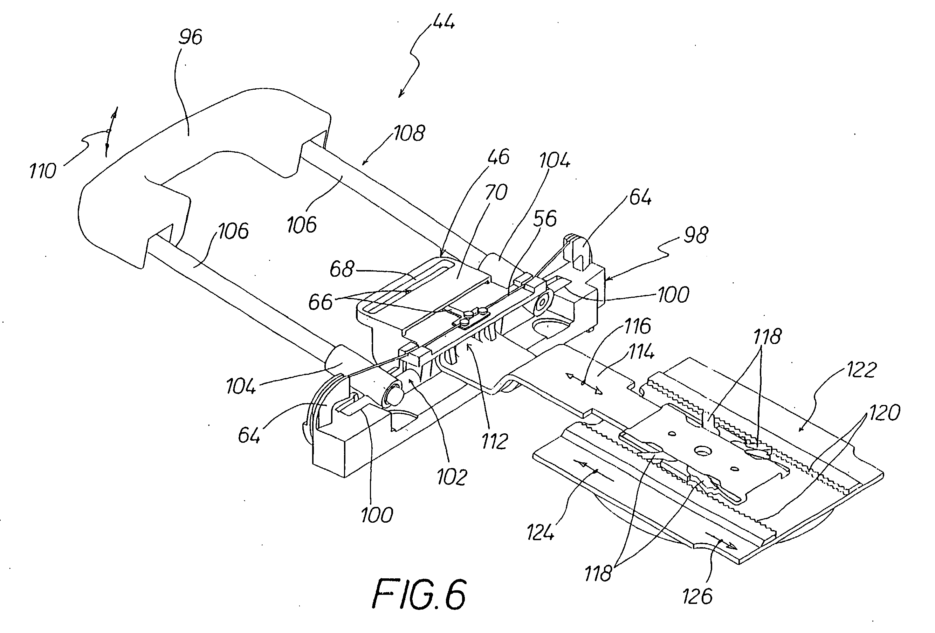

Nimmt auf dem Fahrzeugsitz 10 ein leichtgewichtiger Sitzbenutzer Platz, so wird die Federeinrichtung 40 zum ersten Ende 26 hin verstellt. Nimmt auf dem Fahrzeugsitz 10 ein schwergewichtiger Sitzbenutzer Platz, so verstellt dieser die Federeinrichtung 40 vom ersten Ende 26 weg, um den Fahrzeugsitz 10 auf sein Gewicht passend einzustellen. Zur Verstellung der Federeinrichtung 40 in Richtung des Doppelpfeiles 42 ist die Federeinrichtung 40 mit einer Gewichtseinstell-Betätigungseinrichtung 44 verbunden, die weiter unten in Verbindung mit Figur 6 noch ausführlicher beschrieben wird.

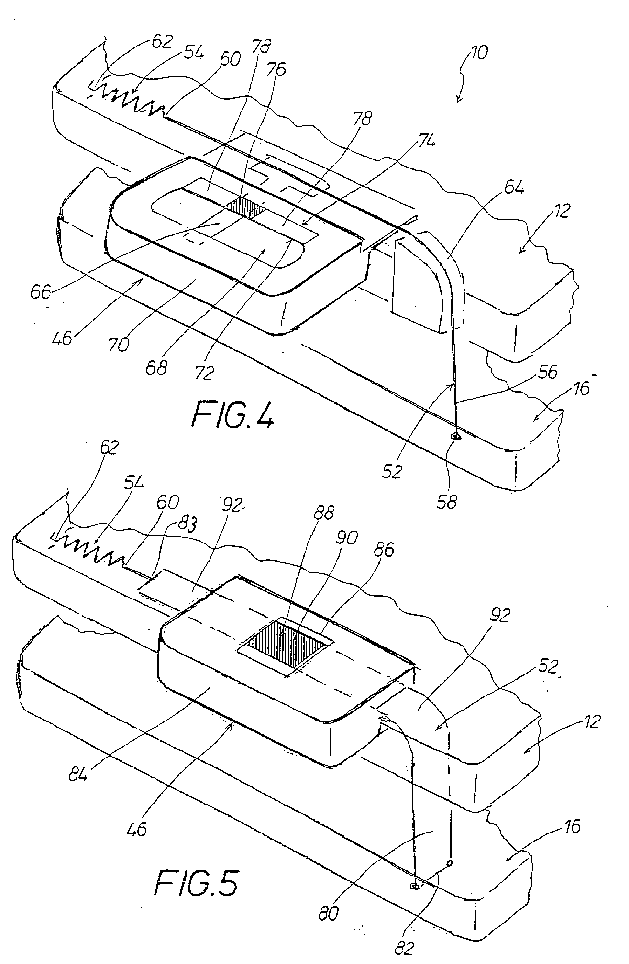

Damit der auf dem Fahrzeugsitz 10 sitzende Sitzbenutzer den Fahrzeugsitz 10 bezüglich des Schwingverhaltens wirklich optimal auf sein tatsächliches Gewicht einstellt, weist der Fahrzeugsitz 10 zur Anzeige der Einstellung der Sitzplatte auf das dem Gewicht des jeweiligen Sitzbenutzers in bezug auf den Federweg der Sitzplatte 12 optimal entsprechende Sitzplattenniveau eine Niveau-Anzeigeeinrichtung 46 auf. Zwei Ausbildungen der Niveau-Anzeigeeinrichtung 46 sind in den Figuren 4 und 5 schematisch dargestellt; die Figur 6 verdeutlicht eine - im Prinzip der Ausbildung gemäß Figur 4 entsprechende - Niveau-Anzeigeeinrichtung 46 in Verbindung mit der genannten bevorzugten Gewichtseinstell-Betätigungseinrichtung 44.

Figur 2 verdeutlicht in einer Diagrammdarstellung den durch einen Doppelpfeil 48 angedeuteten Gesamt-Schwingweg der Sitzplatte 12 in bezug auf die Basis 16 des Fahrzeugsitzes 10 (sh. Figur 1). In der Mitte dieses Gesamt-Schwingweges befindet sich ein optimaler Einstellbereich 50 der Federeinrichtung 40. Dieser optimale Einstellbereich 50 ist durch einen Doppelpfeil bzw. durch eine Schraffur verdeutlicht.

Figur 4 zeigt schematisch abschnittweise die Sitzplatte 12 und die Basis 16 des Fahrzeugsitzes 10 sowie eine Ausbildung der Niveau-Anzeigeeinrichtung 46. Die Niveau-Anzeigeeinrichtung 46 weist ein längliches flexibles Element 52 auf, das mit einem Federelement 54 verbunden ist. Das längliche flexible Element 52 ist von einem Draht 56 gebildet, der mit seinem einen Ende 58 an der Basis 16 fixiert ist. Das zweite Ende 60 des Drahtes 56 ist mit dem Federelement 54 verbunden. Das Federelement 54 ist mit seinem vom Ende 60 entfernten Ende 62 an der Sitzplatte 12 fixiert. Das längliche flexible Element 52, d.h. der Draht 56 und das Federelement 54 sind derartig dimensioniert, daß das Federelement 54 im zusammengebauten Zustand der Niveau-Anzeigeeinrichtung 46 mechanisch gespannt ist. Der Draht 56 ist um ein an der Sitzplatte 12 vorgesehenes Umlenkelement 64 umgelenkt.

Am Draht 56 ist ein Zeiger 66 fixiert, der in eine Sichtöffnung 68 eines Anzeigekörpers 70 hineinsteht. Der Anzeigekörper 70, der also gleichsam einen Skalenkörper bildet, ist am Rand 72 der Sichtöffnung 68 mit einer Markierung 74 versehen. Die Markierung 74 weist einen beispielsweise grün oder gelb gefärbten Mittelbereich 76 auf. An diesen Mittelbereich 76 schließt sich rechts und links jeweils ein Außenbereich 78 an, der z.B. rot gefärbt ist. Der Mittelbereich 76 entspricht dem optimalen Einstellbereich 50 (sh. Figur 2). Befindet sich der Zeiger 66 im Mittelbereich 76, dann hat der Sitzbenutzer den Fahrzeugsitz 10 auf das seinem Gewicht optimal entsprechende Sitzplattenniveau eingestellt. Diese Einstellung erfolgt mit Hilfe der Gewichtseinstell-Betätigungseinrichtung 44, wie sie in Figur 1 schematisch verdeutlicht ist.

Figur 5 zeigt in einer der Figur 4 ähnlichen perspektivischen Darstellung abschnittweise die Basis 16 und die Sitzplatte 12 des Fahrzeugsitzes 10 sowie eine andere Ausbildung der Niveau-Anzeigeeinrichtung 46. Die Niveau-Anzeigeeinrichtung 46 weist ein längliches flexibles Element 52 auf, das von einem Band 80 gebildet ist. Das Band 80 ist mit seinem einen Ende 82 an der Basis 16 fixiert. Das zweite Ende 83 des Bandes 80 ist mit einem Federelement 54 verbunden. Das Federelement 54 ist mit seinem vom zweiten Ende 83 entfernten Ende 62 an der Sitzplatte 12 befestigt. Das Band 80 und das Federelement 54 sind derartig dimensioniert, daß das Federelement 54 im zusammengebauten Zustand der Niveau-Anzeigeeinrichtung 46 mechanisch gespannt ist.

Das als Band 80 ausgebildete längliche flexible Element 52 erstreckt sich durch einen Anzeigekörper 84 hindurch, der mit einer im Vergleich zur Ausbildung gemäß Figur 4 kurzen Sichtöffnung 86 ausgebildet ist. Bei dieser Ausführungsform der Niveau-Anzeigeeinrichtung 46 ist nicht der Anzeigekörper 84 am Rand der Sichtöffnung 86 sondern das Band 80 mit einer Markierung 88 versehen. Diese Markierung 88 weist wiederum einen grünen, gelben oder anders gefärbten oder mit einem geeigneten Symbol versehenen Mittelbereich 90 auf, an den sich rechts und links jeweils ein Außenbereich 92 anschließt. Befindet sich in der Sichtöffnung 86 des Anzeigekörpers 84 der Mittelbereich 90 der Markierung 88, dann ist der Fahrzeugsitz 10 auf das tatsächliche Gewicht des auf dem Fahrzeugsitz 10 sitzenden Sitzbenutzers bezüglich des Schwingverhaltens optimal eingestellt. Befindet sich in der Sichtöffnung 86 einer der beiden Außenbereiche 92 der Markierung 88, dann muß der Sitzbenutzer die Gewichtseinstell-Betätigungseinrichtung 54 (sh. Figur 1) passend betätigen, um die Federeinrichtung 40 so zu verstellen, daß eine passende Gewichtseinstellung und optimale Federung erzielt wird.

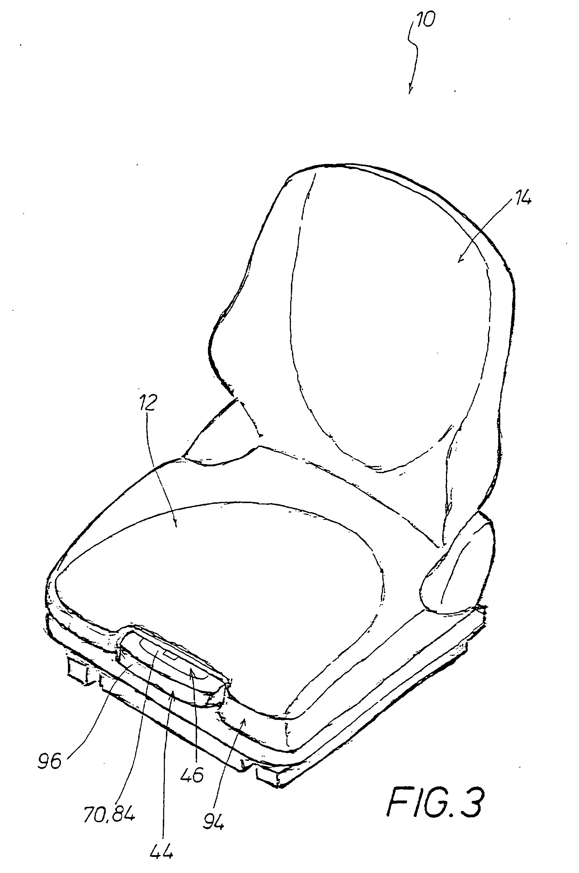

Figur 3 zeigt in einer perspektivischen Ansicht eine Ausbildung des Fahrzeugsitzes 10 mit seiner Sitzplatte 12 und der Rückenlehne 14. Die Figur 3 verdeutlicht außerdem, daß der Anzeigekörper 70 (sh. Figur 4) bzw. der Anzeigekörper 84 (sh. Figur 5) der Niveau-Anzeigeeinrichtung 46 am Vorderrand 94 der Sitzplatte 12 mittig vorgesehen ist. Dem Anzeigekörper 70 bzw. 84 der Niveau-Anzeigeeinrichtung 46 ist die Gewichtseinstell-Betätigungseinrichtung 44 zugeordnet. Die Gewichtseinstell-Betätigungseinrichtung 44 weist einen bügelförmigen Handgriff 96 auf, der zwischen einer in Figur 3 gezeichneten Inaktivstellung und einer vom Anzeigekörper 70 bzw. 84 beabstandeten Aktivstellung verstellbar ist. Diese ist in Figur 6 verdeutlicht.

Figur 6 zeigt in einer perspektivischen Ansicht eine bevorzugte Ausbildung der Gewichtseinstell-Betätigungseinrichtung 44 und eine Ausbildung der Niveau-Anzeigeeinrichtung 46, ähnlich der in Figur 4 schematisch verdeutlichten Ausbildung. Die Niveau-Anzeigeeinrichtung 46 weist einen Anzeigekörper 70 mit einer länglichen Sichtöffnung 68 auf. In die Sichtöffnung 68 steht ein Zeiger 66 hinein, der an einem Draht 56 fixiert ist. Der Draht 56 ist um zwei Umlenkelemente 64 umgelenkt, die von einem Montagekörper 98 wegstehen. Der Draht 56 ist mit seinem einen Ende an der Basis 16 des Fahrzeugsitzes 10 (sh. beispielsweise Figur 4) fixiert. Das zweite Ende des Drahtes 56 ist mit einem Federelement 54 verbunden, das an der Unterseite des Montagekörpers 98 fixiert ist. Der Montagekörper 68 ist an der Sitzplatte 12 angebracht.

Der Montagekörper 98 ist mit Lagerausnehmungen 100 ausgebildet. Die Lagerausnehmungen 100 dienen zur schwenkbaren Lagerung einer Lagerachse 102. Von der Lagerachse 102 stehen voneinander beabstandet und zueinander parallel orientiert Hülsenelemente 104 weg. Durch die beiden Hülsenelemente 104 erstrecken sich Schenkelelemente 106 beweglich hindurch, die miteinander zu einem U-förmigen Bügel 108 verbunden sind. Am U-förmigen Bügel 108 ist der Handgriff 96 der Gewichtseinstell-Betätigungseinrichtung 44 angebracht.

Wird der Handgriff 96 in seiner Aktivstellung um die Lagerachse 102 pumpend auf und ab verschwenkt, was in Figur 6 durch den bogenförmigen Pfeil 110 verdeutlicht ist, so wird ein mit der Lagerachse 102 durch eine Gabelverbindung 112 verbundenes Betätigungsorgan 114 linear hin und her bewegt. Das ist durch den Doppelpfeil 116 verdeutlicht. Am Betätigungsorgan 114 sind federnd Ratschenelemente 118 vorgesehen, die mit Linearverzahnungen 120 eines Verstellelementes 122 derartig zusammenwirken, daß bei einer entsprechenden oszillierenden Bewegung des Betätigungsorganes 114 das Verstellelement 122 schrittweise entweder nach links oder schrittweise nach rechts verstellt wird. Die schrittweise Verstellung des Verstellelementes 122 nach links ist durch den Pfeil 124 und die schrittweise Verstellung nach rechts durch den Pfeil 126 angedeutet. Mit dem Verstellelement 122 ist die Federeinrichtung 40 verbunden (sh. Figur 1), so daß es durch ein oszillierendes Verschwenken des Handgriffes 96 möglich ist, die Federeinrichtung 44 zum ersten Ende 26 hin oder von diesem weg zu verstellen, um den Fahrzeugsitz 10 optimal auf das Gewicht des jeweiligen Sitzbenutzers einzustellen, wobei die optimale Gewichts- bzw. Federungseinstellung erreicht ist, wenn der Zeiger 66 der Niveau-Anzeigeeinrichtung 46 sich im optimalen Einstellbereich 50 (sh. beispielsweise Figur 2), d.h. im Mittelbereich 76 der Markierung 74 befindet.

Eine Verstell-Vorrichtung der oben in Verbindung mit Figur 6 beschriebenen Art ist in der DE 100 39 501 A detailliert beschrieben.

## Patentansprüche

1. Fahrzeugsitz mit einer auf einer Basis (16) angeordneten Sitzplatte (12) und mit einer zur Gewichtseinstellung vorgesehenen Federeinrichtung (40), die mit einer Gewichtseinstell-Betätigungseinrichtung (44) verbunden ist, wobei der Gewichtseinstell-Betätigungseinrichtung (44) eine Niveau-Anzeigeeinrichtung (46) zugeordnet ist, die zur Anzeige der Einstellung der Sitzplatte (12) auf den dem Gewicht des jeweiligen Sitzbenutzers in bezug auf denGesamt-Schwingweg (48) der Sitzplatte (12) in der Mitte dieses Gesamt-Schwingweges (48) befindlichen, optimalen Einstellbereich (50) der Federeinrichtung (40) vorgesehen ist, wobei die Niveau-Anzeigeeinrichtung (46) und die Gewichtseinstell-Betätigungseinrichtung (44) am Vorderrand (94) der Sitzplatte (12) mittig vorgesehen sind,
**dadurch gekennzeichnet,**
**daß** die Niveau-Anzeigeeinrichtung (46) ein mittels eines Federelementes (54) zwischen der Basis (16) und der Sitzplatte (12) mechanisch vorgespannt angeordnetes längliches flexibles Element (52) und einen dem länglichen flexiblen Element (52) zugeordneten Anzeigekörper (70; 84) aufweist.

2. Fahrzeugsitz nach Anspruch 1,
**dadurch gekenntzeichnet**,
**daß** das längliche flexible Element (52) einen Zeiger (66) und daß der Anzeigekörper (70) eine längliche Sichtöffnung (68) aufweist, in die der Zeiger (66) hineinsteht.

3. Fahrzeugsitz nach Anspruch 2,
**dadurch gekennzeichnet,**
**daß** das längliche flexible Element (52) von einem Draht (56) gebildet ist.

4. Fahrzeugsitz nach Anspruch 2,
**dadurch gekennzeichnet,**
**daß** der Anzeigekörper (70) eine Markierung (74) für das dem jeweiligen Sitzbenutzer in bezug auf den Federweg (48) optimal entsprechende Sitzniveau aufweist.

5. Fahrzeugsitz nach Anspruch 1,
**dadurch gekennzeichnet,**
**daß** das längliche flexible Element (52) eine Markierung (88) für das dem jeweiligen Sitzbenutzer in bezug auf den Federweg (48) optimal entsprechende Sitzniveau und daß der Anzeigekörper (84) eine kleine Sichtöffnung (86) für das längliche flexible Element (52) aufweist.

6. Fahrzeugsitz nach Anspruch 5,
**dadurch gekennzeichnet,**
**daß** das längliche flexible Element (52) von einem Band (80) gebildet ist.

7. Fahrzeugsitz nach einem der Ansprüche 1 bis 6,
**dadurch gekennzeichnet,**
**daß** der Anzeigekörper (70; 84) am Vorderrand (94) der Sitzplatte (12) mittig vorgesehen ist.

8. Fahrzeugsitz nach einem der Ansprüche 1 bis 7,
**dadurch gekennzeichnet,**
**daß** die Gewichtseinstell-Betätigungseinrichtung (44) einen Handgriff (96) aufweist, der zwischen einer zum Anzeigekörper (70; 84) benachbarten Inaktivstellung und einer vom Anzeigekörper (70; 84) beabstandeten Aktivstellung verstellbar ist.

9. Fahrzeugsitz nach Anspruch 8,
**dadurch gekennzeichnet,**
**daß** der Handgriff (96) zwischen der Inaktivstellung und der Aktivstellung linear in Sitzlängsrichtung hin und her verstellbar und in der Aktivstellung zum schrittweisen Verstellen der zur Gewichtseinstellung vorgesehenen Federeinrichtung (40) um eine horizontale Schwenkachse auf und ab schwenkbar ist.

10. Fahrzeugsitz nach Anspruch 8,
**dadurch gekennzeichnet,**
**daß** der Handgriff (96) um eine vertikale Achse zwischen der Inaktivstellung und der Aktivstellung hin und her verstellbar und in der Aktivstellung zum schrittweisen Verstellen der zur Gewichtseinstellung vorgesehenen Federeinrichtung (40) um eine horizontale Schwenkachse auf und ab schwenkbar ist.

## Claims

1. Vehicle seat with a seat plate (12) arranged on a base (16) and with a spring device (40) which is provided for weight adjustment and is connected to a weight-adjustment actuating device (44), wherein the weight-adjustment actuating device (44) is assigned a level indicating device (46) which is provided for indicating the adjustment of the seat plate (12) to the adjustment range (50) of the spring device (40) that is optimum for the weight of the particular seat user in relation to the overall oscillating travel (48) of the seat plate (12) and that is located in the centre of said overall oscillating travel (48), and wherein the level indicating device (46) and the weight-adjustment actuating device (44) are provided centrally on the front edge (94) of the seat plate (12), **characterized in that** the level indicating device (46) has an elongate, flexible element (52) arranged between the base (16) and the seat plate (12) in a mechanically prestressed manner by means of a spring element (54), and an indicating element (70; 84) assigned to the elongate, flexible element (52).

2. Vehicle seat according to Claim 1, **characterized in that** the elongate, flexible element (52) has a pointer (66), and **in that** the indicating element (70) has an elongate viewing opening (68) into which the pointer (66) projects.

3. Vehicle seat according to Claim 2, **characterized in that** the elongate, flexible element (52) is formed by a wire (56).

4. Vehicle seat according to Claim 2, **characterized in that** the indicating element (70) has a marking (74) for the seat level corresponding optimally to the respective seat user in relation to the spring travel (48).

5. Vehicle seat according to Claim 1, **characterized in that** the elongate, flexible element (52) has a marking (88) for the seat level optimally corresponding to the respective seat user in relation to the spring travel (48), and **in that** the indicating element (84) has a small viewing opening (86) for the elongate, flexible element (52).

6. Vehicle seat according to Claim 5, **characterized in that** the elongate, flexible element (52) is formed by a strip (80).

7. Vehicle seat according to one of Claims 1 to 6, **characterized in that** the indicating element (70; 84) is provided centrally on the front edge (94) of the seat plate (12).

8. Vehicle seat according to one of Claims 1 to 7, **characterized in that** the weight-adjustment actuating device (44) has a handle (96) which can be adjusted between an inactive position adjacent to the indicating element (70; 84) and an active position at a distance from the indicating element (70; 84).

9. Vehicle seat according to Claim 8, **characterized in that** the handle (96) can be adjusted to and fro linearly in the longitudinal direction of the seat between the inactive position and the active position and, in the active position, can be pivoted up and down about a horizontal pivot axis for the stepwise adjustment of the spring device (40) provided for the weight adjustment.

10. Vehicle seat according to Claim 8, **characterized in that** the handle (96) can be adjusted to and fro about a vertical axis between the inactive position and the active position and, in the active position, can be pivoted up and down about a horizontal pivot axis for the stepwise adjustment of the spring device (40) provided for the weight adjustment.

## Revendications

1. Siège de véhicule présentant une plaque de siège (12) disposée sur une base (16) et un dispositif à ressort (40) prévu pour régler le poids, qui est relié à un dispositif d'actionnement de réglage de poids (44), au dispositif d'actionnement de réglage de poids (44) étant associé un dispositif d'affichage de niveau (46) qui est prévu pour afficher le réglage de la plaque de siège (12) sur la plage de réglage (50) du dispositif à ressort (40) optimale, se trouvant au poids de l'utilisateur du siège respectif par rapport à la course oscillante globale (48) de la plaque de siège (12) au milieu de cette course d'oscillation globale (48), le dispositif d'affichage de niveau (46) et le dispositif d'actionnement de réglage de poids (44) étant prévus au milieu sur le bord avant (94) de la plaque de siège (12),
**caractérisé en ce**
**que** le dispositif d'affichage de niveau (46) présente un élément (52) flexible, oblong disposé en précontrainte mécanique au moyen d'un élément formant ressort (54) entre la base (16) et la plaque de siège (12) et un corps d'affichage (70 ; 84) associé à l'élément (52) flexible, oblong.

2. Siège de véhicule selon la revendication 1,
**caractérisé en ce**
**que** l'élément (52) flexible, oblong présente un indicateur (66) et en ce que le corps d'affichage (70) présente un regard (68) oblong, dans lequel est intégré l'indicateur (66).

3. Siège de véhicule selon la revendication 2,
**caractérisé en ce**
**que** l'élément flexible, oblong (52) est formé par un fil métallique (56).

4. Siège de véhicule selon la revendication 2,
**caractérisé en ce**
**que** le corps d'affichage (70) présente un marquage (74) pour le niveau de siège correspondant de manière optimale à l'utilisateur du siège respectif par rapport à la course élastique (48).

5. Siège de véhicule selon la revendication 1,
**caractérisé en ce**
**que** l'élément (52) flexible, oblong présente un marquage (88) pour le niveau de siège correspondant de manière optimale à l'utilisateur du siège respectif par rapport à la course élastique (48) et en ce que le corps d'affichage (84) présente un petit regard (86) pour l'élément flexible, oblong (52).

6. Siège de véhicule selon la revendication 5,
**caractérisé en ce**
**que** l'élément (52) flexible, oblong est formé par une bande (80).

7. Siège de véhicule selon l'une quelconque des revendications 1 à 6,
**caractérisé en ce**
**que** le corps d'affichage (70 ; 84) est prévu au milieu sur le bord avant(94) de la plaque de siège (12).

8. Siège de véhicule selon l'une quelconque des revendications 1 à 7,
**caractérisé en ce**
**que** le dispositif d'actionnement de réglage de poids (44) présente une poignée (96) qui peut être réglée entre une position inactive contiguë au corps d'affichage (70 ; 84) et une position active espacée du corps d'affichage (70 ; 84).

9. Siège de véhicule selon la revendication 8,
**caractérisé en ce**
**que** la poignée (96) peut être réglée de manière alternative, linéairement dans le sens longitudinal du siège, entre la position inactive et la position active et peut être pivotée de haut en bas autour d'un axe de pivotement horizontal dans la position active pour le réglage progressif du dispositif à ressort (40) prévu pour le réglage du poids.

10. Siège de véhicule selon la revendication 8,
**caractérisé en ce**
**que** la poignée (96) peut être réglée de manière alternative autour d' un axe vertical entre la position inactive et la position active et peut être pivotée de haut en bas autour d'un axe de pivotement horizontal dans la position active pour le réglage progressif du dispositif à ressort (40) prévu pour le réglage du poids.
